# EUROPÄISCHE PATENTSCHRIFT

(11) **EP 1 620 348 B1**
(45) Veröffentlichungstag und Bekanntmachung des Hinweises auf die Patenterteilung: **20.01.2010**
(21) Anmeldenummer: 04718643.2
(22) Anmeldetag: 09.03.2004
(51) Int. Cl.: B68B 1/08

(54) **KINNKETTE**
CHIN CHAIN
CHAINE MENTONNIERE

(30) Priorität: 10.04.2003 DE 10316525
(43) Veröffentlichungstag der Anmeldung: 01.02.2006
(73) Patentinhaber: Deffner, Karin, 83730 Fischbachau (DE)
(72) Erfinder: Deffner, Karin, 83730 Fischbachau (DE)
(74) Vertreter: Dilg, Andreas
(86) Internationale Anmeldenummer: PCT/EP2004/002418
(87) Internationale Veröffentlichungsnummer: WO 2004/089809

(56) Entgegenhaltungen:
- US-A- 896 164
- US-A- 2 025 469

## Beschreibung

Die vorliegenden Erfindung betrifft eine Kinnkette.

Eine Zäumung wie z.B. eine Kandarenzäumung ermöglicht dem fortgeschrittenen Reiter, auf einem entsprechend ausgebildeten Pferd eine feinere Hilfengebung. Die Kandare besteht bei der Zäumung von ausgebildeten Dressurpferden üblicherweise aus zwei Gebissen, so dass der Reiter zwei Zügelpaare gleichzeitig handhaben muss. Die heute z.B. bei einer Kandarenzäumung verwendeten üblichen Kinnketten bestehen aus mehreren sich zu den Enden hin verjüngenden und sich ineinander schmiegenden ovalen Ringen. Ein kleiner, runder, in der Mitte der Kinnkette befindlicher Ring, Scherriemenring genannt, diente historisch zum Anschnallen des sogenannten Scherriemens, der bei unpassender Länge einer Kinnkette ein Verrutschen verhindern sollte (heute praktisch ohne Bedeutung). Die immer nach rechts auszudrehende Kinnkette wird von oben in die benachbarten Kinnkettenhaken eingehängt und zwar auf der rechten Seite von innen und auf der linken Seite von außen. Ihre richtige Biegung bzw. Flexibilität ist von wesentlichem Einfluss auf eine gute Zäumung und Einwirkung.

Die heute üblicherweise verwendeten Kinnketten für Kandaren haben den Nachteil, dass sich die Glieder leicht verdrehen, so dass sich einzelne Glieder hochkant stellen und auf die Lefze des Pferdes drücken, wenn sie nicht vor dem Anlegen jedes Mal auf das sorgfältigste ausgedreht worden sind.

Die deutsche Reichspatentschrift 361479 offenbart eine Kinnkette für Kandaren, bei der jedes Glied mit einer Öse versehen ist, durch welche das benachbarte Glied hindurch gesteckt ist, so dass sich die Glieder nicht verdrehen können. Überdies offenbart diese Patentschrift die Ausführung der Kinnkette dergestalt, dass je zwei benachbarte Glieder starr anstatt gelenkig miteinander verbunden sind.

Die US 896 164 beschreibt ein Halfter mit einer Kinnkette gemäß dem Oberbegriff von Anspruch 1, welches ein Kopf-, Backen-, Nasen- und Maulstück sowie einen starren Abschnitt aufweist, wobei durch den starren Abschnitt bewirkt wird, dass das Maulstück in einer passenden Position verbleibt und eine Aufwärtsbewegung verhindert.

Es ist die Aufgabe der vorliegenden Erfindung, eine verbesserte Kinnkette anzugeben.

Gemäß einem Ausführungsbeispiel der vorliegenden Erfindung wird diese Aufgabe mit einer Kinnkette gelöst, umfassend ein erstes Kettenelement und ein zweites Kettenelement. Das erste Kettenelement umfasst zumindest ein erstes Glied und das zweite Kettenelement umfasst zumindest ein zweites Glied. Ein erster Bereich des zumindest einen ersten Glieds ist aus einer ersten Ebene des zumindest ein ersten Glieds in eine erste Richtung heraus verdreht. Ein zweiter Bereich des zumindest einen zweiten Glieds ist aus einer zweiten Ebene des zumindest einen zweiten Glieds in eine zweiten Richtung heraus verdreht. Gemäß der vorliegenden Erfindung ist die erste Richtung entgegen gesetzt der zweiten Richtung.

In anderen Worten wird gemäß der vorliegenden Erfindung eine Kinnkette angegeben, die ein erstes Kinnkettenelement aufweist, das nach rechts auszudrehen ist und ein zweites Kinnkettenelement aufweist, das nach links auszudrehen ist. Mittels dieser Ausführungsform der vorliegenden Erfindung wird ein Problem der üblichen Kinnketten gelöst, das nun im folgenden beschrieben wird.

Kinnketten, die nur aus rechts auszudrehenden Gliedern oder Kettenelementen bestehen, d.h. Kinnketten, deren Verkettung der einzelnen Glieder über die gesamte Kettenlänge gleich gerichtet ist, bewirken einen ungleichmäßigen Zug auf die beiden Seiten der Kandare und der Zug bewirkt, die gleich gerichtete Verkettung der einzelnen Glieder eine Hebelwirkung auf die rechts und links vom Pferdemaul befindlichen Kinnkettenhaken, mit dem Effekt ausübt, dass in der Regel der linke Kinnkettenhaken vom Maul weg und der rechte Kinnkettenhaken zum Maul hingezogen wird. Durch diese unterschiedliche Krafteinwirkung auf die beiden Haken bzw. Maulwinkel (links nach außen, rechts nach innen) wird zum einen eine unterschiedliche Hebelwirkung auf die Kandarenstange im Pferdemaul erreicht. Es wird rechts mehr Druck auf die Lade und auf die Lefze ausübt, als links. Gleichzeitig sind die Auswirkungen auf das Pferdemaul bzw. den Maulwinkel zu beachten, die durch den Zug nach innen auf den rechten Kinnkettenhaken entstehen. Dies ist häufig an einer einseitig hängenden Lefze auf der rechten Maulseite des Pferdes zu beobachten. Überdies führt dies häufig zu Verletzungen am Maulwinkel, bis hin zu Zungenfehlern, wie beispielsweise einem Herausschieben der Zunge.

Die Kinnkette gemäß der vorliegenden Erfindung weist ein erstes und ein zweites Kettenelement auf, wobei in dem ersten und dem zweiten Kettenelement die Kettenglieder jeweils gegenläufig verkettet sind. Auf diese Weise wird eine Kraft, die auf die Kinnkette ausgeübt wird gleichmäßig auf die linke und auf die rechte Seite der Kandare abgeleitet. Somit wird eine unterschiedliche einseitige Hebelwirkung, nämlich der vermehrte Druck nach rechts auf die Kandarenstange ausgeschlossen. Überdies wird der Zug nach innen auf den rechten Kinnkettenhaken dadurch ausgeglichen, bzw. aufgehoben. Vorteilhaft wirkt demgemäß die Kinnkette gemäß der vorliegenden Erfindung gegen eine einseitig hängende Lefze, gegen Verletzungen am Maulwinkel und gegen Zungenfehler.

Vorteilhafte Ausgestaltungen der vorliegenden Erfindung ergeben sich aus den Unteransprüchen.

Vorteilhaften Ausführungsformen der vorliegenden Erfindung werden nun in den Zeichnungen dargestellt und im Folgenden näher beschrieben.

Fig. 1 zeigt eine dreidimensionale Ansicht eines Ausführungsbeispiels einer Kinnkette gemäß der vorliegenden Erfindung.

Fig. 2 zeigt eine Draufsicht auf ein Glied eines ersten Kettenelements gemäß einem Ausführungsbeispiel der vorliegenden Erfindung.

Fig. 3 zeigt eine Draufsicht auf ein Glied eines zweiten Kettenelements gemäß einem Ausführungsbeispiel der vorliegenden Erfindung.

Fig. 4 zeigt das Glied von Fig. 2 in einer Seitenansicht gemäß einem Ausführungsbeispiel der vorliegenden Erfindung.

Fig. 5 zeigt eine Seitenansicht des Glieds von Fig. 3 gemäß einem Ausführungsbeispiel der vorliegenden Erfindung.

Fig. 6 zeigt eine weitere dreidimensionale Ansicht einer Kinnkette gemäß einem weiteren Ausführungsbeispiel der vorliegenden Erfindung.

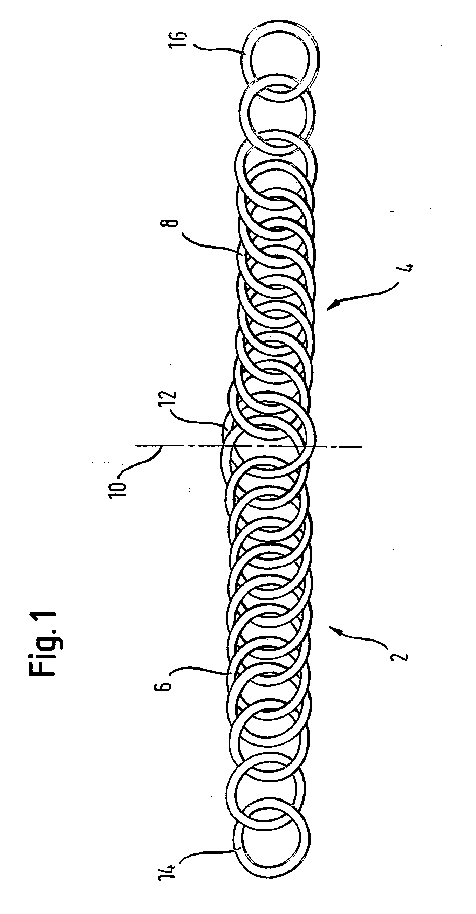

Fig. 1 zeigt eine dreidimensionale Ansicht einer Kinnkette für eine Kandare gemäß einem Ausführungsbeispiel der vorliegenden Erfindung. Die in Fig. 1 dargestellte Kinnkette umfasst ein erstes Kettenelement 2 und ein zweites Kettenelement 4. Das erste Kettenelement 2 umfasst eine Vielzahl von ersten Gliedern 6. Das zweite Kettenelement 4 umfasst eine Vielzahl von zweiten Gliedern 8. Wie Fig. 1 zu entnehmen ist, sind die ersten Glieder 6 des ersten Kettenelements 2 nach rechts verkettet, d.h. nach rechts ausdrehend und die zweiten Glieder 8 des zweiten Kettenelements 4 sind nach links verkettet, d.h. nach links ausdrehend. In anderen Worten sind die ersten Glieder 6 des ersten Kettenelements 2 so ausgestaltet, dass sie einen Bereich aufweisen, der aus einer Ebene des Glieds heraus verdreht ist. Ebenfalls sind die Glieder 8 des zweiten Kettenelements so ausgestaltet, dass sie einem Bereich aufweisen, der aus der Ebene des jeweiligen Glieds heraus verdreht ist. Die Verdrehung der Glieder 8 des zweiten Kettenelements 4 ist entgegengesetzt der Verdrehung der Glieder 6 des ersten Kettenelements 2.

Die Bezugsziffer 10 bezeichnet eine Symmetrielinie der Kinnkette. Betrachtet man den linken Teil der Kimkette umfassend das erste Kettenelement 2, so entspricht dieser linke Teil der Kinnkette exakt einem linken Teil einer traditionellen Kinnkette. Im Gegensatz zu der traditionellen Kinnkette ist jedoch der rechte Teil, d.h. der Teil rechts der Symmetrielinie 10 mit einer Verkettung in entgegengesetzter Verkettungsrichtung ausgestaltet. So weist der Bereich links der von der Symmetrielinie 10 eine rechtsausdrehende Verkettung auf, wohingegen der Bereich rechts der Synunetrielinie 10 eine linksausdrehende Verkettung aufweist.

In der Mitte der Kinnkette, d.h. im Bereich der Symmetrielinie 10 ist ein Verbindungsglied oder Ring 12 vorgesehen, um das erste Kettenelement 2 mit dem zweiten Kettenelement 4 zu verbinden. Ferner sind an den Enden des ersten Kettenelements 2 und des zweiten Kettenelements 4 Glieder 14 und 16 vorgesehen, die in die Kandare einzuhängen sind.

Fig. 1 ist ebenfalls zu entnehmen, dass die Glieder 6 und 8 jeweils so verkettet sind, dass es in dem ersten Kettenelement 2 und dem zweiten Kettenelement 4 jeweils Bereiche gibt, in denen jeweils vier benachbarte Glieder 6 und 8 in ein Glied 6 und 8 eingehängt sind.

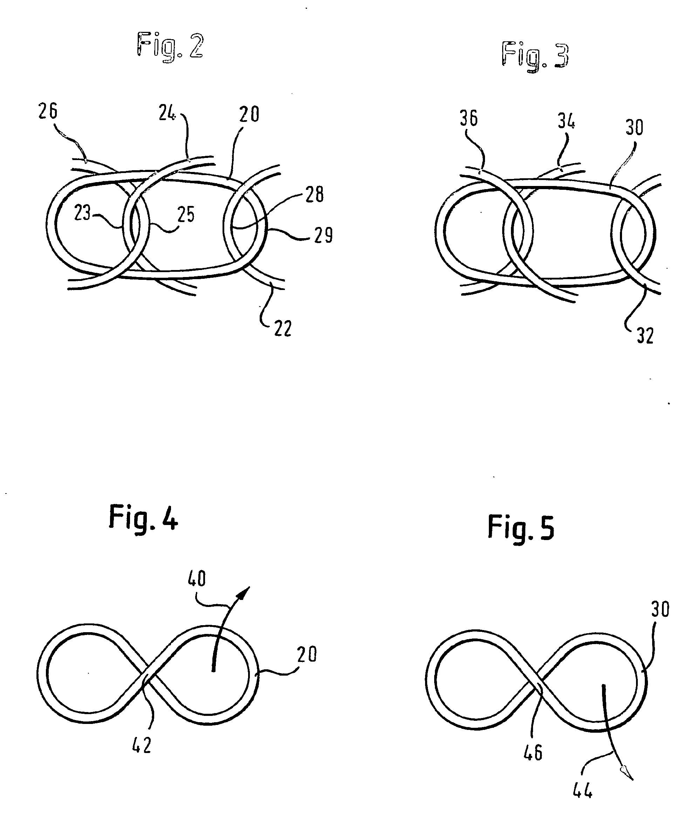

Fig. 2 zeigt eine eindimensionale Draufsicht auf ein Glied 20 eines ersten Kettenelements und Fig. 3 zeigt eine eindimensionale Draufsicht auf ein Glied 30 eines zweiten Kettenelements.

Wie Fig. 2 zu entnehmen ist, sind in das Glied 20 drei benachbarte Glieder 22, 24 und 26 eingehängt. Die Glieder 22 und 24 erstrecken sich nach rechts und das Glied 26 erstreckt sich weiter nach links. Das Glied 22 ist so in das Glied 20 eingehängt, dass ein Endbereich 28, der mit einer Verdickung versehen sein kann, direkt an einem Endbereich 29 des Glieds 20 bei Belastung zur Auflage kommt. Das Glied 24 ist ebenfalls in das Glied 28 eingehängt. Bei Belastung der Glieder 24 und 26 liegt ein Bereich 25 des Gliedes 26, der als Endbereich ausgestaltet ist und eventuell eine Verdickung aufweisen kann, an einem Endbereich 23 des Gliedes 24, der ebenfalls eine Verdickung aufweisen kann, an. Das Glied 22 ist so in das Glied 20 eingehängt, dass der obere Bereich des Glieds 22 über das Glied 20 geht, wohingegen der untere Bereich des Glieds 22 über das Glied 20 geht, wohingegen der untere Bereich des Glieds 22 unter dem Glied 20 durchgeht. Das Glied 24 ist so in das Glied 20 und das Glied 20 eingehängt, dass ein oberer Bereich des Glieds 24 über das Glied 20 geht, im Anschluss daran über das Glied 26 drübergeht und dann der untere Bereich des Glieds 24 unter dem Glied 25 hindurch geht und unter dem Glied 20. Das Glied 26 ist so in die Glieder 20 und 24 eingehängt, dass der obere Bereich unter dem Glied 20 durchgeht, unter dem Glied 24 durchgeht und dann in dem unteren Bereich über das Glied 24 drüber liegt und in seinem unteren Bereich über dem Glied 20 liegt.

Ähnlich wie in Fig. 2 sind in Fig. 3 drei Glieder 32, 34 und 36 in das Glied 30 eingehängt. Das Glied 32 ist derart in das Glied 30 eingehängt, dass es in dem oberen Bereich in der Perspektive der Fig. 3 unter dem Glied 30 hindurch verläuft, jedoch in dem unteren Bereich über das Glied 30 hinweg verläuft. Das Glied 34 und das Glied 36 sind so mit dem Glied 30 verkettet, dass das Glied 36 auch in das Glied 34 eingehängt ist, bzw. das Glied 34 in das Glied 36. Die Richtung wie die Glieder 34 und 36 in das Glied 30 eingehängt sind lässt sich Fig. 3 entnehmen. Gemäß Fig. 3 ist das Glied 36 so eingehängt, dass es in seinem oberen Bereich über das Glied 30 und über das Glied 34 hinweg verläuft, in seinem unteren Bereich jedoch unter den Gliedern 34 und 30 weiter verläuft. Das Glied 34 ist so mit den Gliedern 30 und 36 verkettet, dass es in der Perspektive der Fig. 3 in seinem oberen Bereich unter dem Glied 30 und dem Glied 36 verläuft, in seinem unteren Bereich jedoch über dem Glied 36 und über dem Glied 30. Die Glieder 20, 22,24, 26, 30, 32, 34, 36 können jeweils mit Verdickungen an dem Berührungsflächen versehen sein. Überdies können die Glieder oval, rund oder auch ellipsenförmig ausgestaltet sein. Solche Verdickungen können auch von Schweißnähten oder Hartlotverbindungen herrühren.

Fig. 4 zeigt eine eindimensionale Seitenansicht des Gliedes 20 von Fig. 2. Wie Fig. 4 zu entnehmen ist, ist das Glied 20 nach rechts verdreht. Dies ist mit dem Pfeil 40 in Fig. 4 verdeutlicht. Dies kann auch in anderen Worten wie folgt beschrieben werden:
Als Ausgangsglied wird ein in der Seitenansicht nicht verdreht, d.h. flaches Glied 20 angenommen. Dieses flache Glied 20 weist dann eine Ebene auf. Dann wird das Glied 20 derart verdreht, dass sich ein Bereich aus dieser Ebene heraus verdreht. Einmal, für das erste Kettenelement wird dann das Kettenelement 20 so verwendet, dass ein Mittelbereich 42 in der Seitenansicht von links unten nach rechts oben verläuft, d.h. rechts verkettet ist. In dieser Position wird das Glied 20 in dem ersten Kettenelement mit den anderen Kettengliedern, wie in Fig. 2 gezeigt ist, verkettet.

Fig. 5 zeigt eine eindimensionale Seitenansicht des Kettenelements 30 von Fig. 3. Wie Fig. 5 zu entnehmen ist und wie mittels des Pfeils 44 in Fig. 5 dargestellt ist, ist das Kettenelement 3 0 nach rechts verdreht. Dies bedeutet, dass in der in Fig. 5 gezeigten Seitenansicht ein vorderer Mittelbereich von links oben nach rechts unten verläuft. Ein Vergleich der Glieder 20 und 30 in den Figuren 4 und 5 zeigt, dass der vordere Mittelbereich 42 im Gegensatz zu dem vorderen Mittelbereich 46 einen positiven Gradienten aufweist, nämlich von links unten nach rechts oben verläuft, wohingegen der vorderen Mittelbereich 46 des Gliedes 30 einen negativen Gradient aufweist, nämlich von links oben nach rechts unten verläuft. Die Kettenglieder 20 und 30 können so ausgestaltet sein, dass sie identisch sind jedoch in entgegengesetzter Richtung in den beiden Kettenelementen verkettet werden. Vorteilhaft ermöglicht die in den Figuren 1 bis 5 dargestellte Kinnkette eine gleichseitige Krafteinwirkung auf die beiden Haken bzw. Maulwinkel. Dadurch wird auch eine gleiche Hebelwirkung der Kandarenstangen im Pferdemaul erreicht, so dass der Druck auf die Lade und die Lefze rechts gleich dem Druck auf die Lade bzw. Lefze links ist. Überdies wird bei Belastung der Kinnkette die Belastung gleichmäßig auf beide Seiten abgeleitet. Vorteilhaft wird damit eine einseitig hängenden Lefze, und gegebenenfalls Verletzungen im Maulwinkel bis hin zu Zungenfehler beim Pferd entgegen gewirkt. Darüber hinaus wird eine Schmerzbelastung des Pferdes verringert.

Vorteilhaft wird die in Fig. 1 bis 5 gezeigte Kinnkette in Verbindung mit einer handelsüblichen Gummiunterlagen verwendet, die auch bei einer traditionellen Kinnkette verwendet wird. Vorteilhaft wird in Verbindung mit der Gummiunterlage eine Verdrehung der einzelnen Kettenglieder unterbunden und damit auch eine Verletzung des Pferdes durch die Verdrehung der einzelnen Kettenglieder.

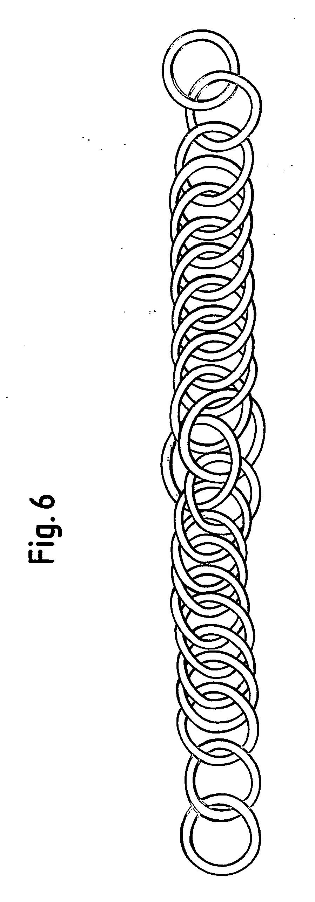

Fig. 6 zeigt eine dreidimensionale Ansicht eines weiteren Ausführungsbeispiels der Kinnkette gemäß der vorliegenden Erfindung wie sie für eine Zäumung wie beispielsweise eine Kandärenzäumung verwendet werden kann. Insbesondere ist Fig. 6 die entgegengesetzte Verdrehung der Kettenelemente des linken Kettenelements und des rechten Kettenelements zu entnehmen.

Wie oben dargelegt, kann die Kinnkette gemäß der vorliegenden Erfindung für Zäumungen verwendet werden; beispielsweise für Kandarenzäumungen. Ebenso kann die Kinnkette für Dressurpferde als auch für Zugpferde, die einen Wagen ziehen, eingesetzt werden.

## Patentansprüche

1. Kinnkette für eine Zäumung, umfassend
ein erstes Kettenelement (2) und ein zweites Kettenelement(4);
wobei das erste Kettenelement (2) zumindest ein erstes Glied (6, 20, 22, 24, 26) umfasst und das zweite Kettenelement zumindest ein zweites Glied (8, 30, 32, 34, 36) umfasst;
wobei ein erster Bereich des zumindest einen ersten Glieds (6, 20, 22, 24, 26) aus einer ersten Ebene des zumindest einen ersten Glieds (6, 20, 22, 24, 26) in einer ersten Richtung heraus verdreht ist;
wobei ein zweiter Bereich des zumindest einen zweiten Glieds (8, 30, 32, 34, 36) aus einer zweiten Ebene des zumindest einen zweiten Glieds (8, 30, 32, 34, 36) in einer zweiten Richtung heraus verdreht ist; **dadurch gekennzeichnet, dass**
die erste Richtung entgegengesetzt der zweiten Richtung ist.

2. Kinnkette nach Anspruch 1,
**dadurch gekennzeichnet, dass** das erste Kettenelement (2) ein erstes (14) und ein zweites Ende aufweist und das zweite Kettenelement (4) ein drittes und ein viertes (16) Ende aufweist, wobei das zweite und das dritte Ende verbunden sind und das erste und vierte Ende zur Anbringung an der Zäumung ausgebildet sind.

3. Kinnkette nach Anspruch 1 oder 2,
**dadurch gekennzeichnet, dass** der erste und der zweite Bereich des zumindest einen ersten und des zumindest einen zweiten Glieds (6, 20, 22, 24, 26, 8, 30, 32, 34, 36) so in die erste und die zweite Richtung aus der ersten und zweiten Ebene verdreht sind, dass bei einer Anbringung der Kinnkette an der Zäumung eine Kraft die auf die Kinnkette einwirkt zu im Wesentlichen gleichen Teilen an eine linke Seite und an einer rechte Seite einer Kandare übertragen wird.

4. Kinnkette nach Anspruch 1, 2 oder 3,
**dadurch gekennzeichnet, dass** sich durch die Verdrehung des ersten Bereichs des zumindest einen ersten Glieds (6, 20, 22, 24, 26) aus der ersten Ebene des zumindest einen ersten Glieds in der ersten Richtung heraus und des zweiten Bereichs des zumindest einen zweiten Glieds aus der zweiten Ebene des zumindest einen zweiten Glieds (8, 30, 32, 34, 36) in der zweiten Richtung heraus eine erste Verdrehung des zumindest einen ersten Glieds bei Belastung gegenüber benachbarten Gliedern des ersten Kettenelements und eine zweite Verdrehung des zumindest einen zweiten Glieds bei Belastung gegenüber benachbarten Gliedern des zweiten Kettenelements aufheben und bei Belastung bei Anbringung an der Zäumung die Belastung in gleichen Teilen an die zwei Seiten einer Kandare weitergeleitet wird.

5. Kinnkette nach einem der Ansprüche 1 bis 4,
**dadurch gekennzeichnet, dass** das zweite und das dritte Ende mittels eines Verbindungsrings (12) verbunden sind.

6. Kinnkette nach einem der Ansprüche 1 bis 5,
**dadurch gekennzeichnet, dass** zumindest vier erste Glieder (20,22,24,26) vorgesehen sind, wobei in ein Glied (20) der zumindest vier ersten Glieder drei Glieder (22, 24, 26) der zumindest vier ersten Glieder ( 20, 22, 24, 26) eingefädelt sind oder zumindest vier zweite Glieder (30, 32, 34, 36) vorgesehen sind, wobei in ein Glied (30) der zumindest vier zweiten Glieder (30, 32, 34, 36) drei Glieder (32, 34, 36) der zumindest vier zweiten Glieder (30, 32, 34, 36) eingefädelt sind.

7. Kinnkette nach einem der Ansprüche 1 bis 6,
**dadurch gekennzeichnet, dass** das zumindest eine erste Glied (6, 20, 22, 24, 26) und das zumindest eine zweite Glied (8, 30, 32, 34, 36) an Berührungspunkten (23, 25, 28, 29) zu benachbarten Gliedern Verdickungen aufweisen.

8. Kinnkette nach einem der Ansprüche 1 bis 7,
**dadurch gekennzeichnet, dass** das zumindest eine erste Glied (6, 20, 22, 24, 26) und das zumindest eine zweite Glied (8, 30, 32, 34, 36) aus Messing, Kupfer, Edelstahl oder Eisen bestehen.

9. Kinnkette nach einem der Ansprüche 1 bis 8,
**dadurch gekennzeichnet, dass** eine Gummiunterlage vorgesehen ist, in die die Kinnkette eingezogen ist, wobei die Gummiunterlage eine Verletzung des Pferdes bei einer Verdrehung der einzelnen Glied (6, 20, 22, 24, 26, 8, 30, 32, 34, 36) verneidet.

## Claims

1. Chin chain for a bridle, comprising
a first chain element (2) and a second chain element (4),
wherein the first chain element (2) comprises at least one first member (6, 20, 22, 24, 26) and the second chain element comprises at least one second member (8, 30, 32, 34, 36),
wherein a first area of the at least one first member (6, 20, 22, 24, 26) is twisted in a first direction from a first plane of the at least one first member (6, 20, 22, 24, 26),
wherein a second area of the at least one second member (8, 30, 32, 34, 36) is twisted in a second direction from a second plane of the at least one second member (8, 30, 32, 34, 36), **characterised in that**
the first direction is opposite from the second direction.

2. Chin chain according to claim 1,
**characterised in that** the first chain element (2) comprises a first (14) and a second end and the second chain element (4) comprises a third and a fourth (16) end, wherein the second and the third ends are connected and the and the first and fourth ends are designed for attachment to the bridle.

3. Chin chain according to claim 1 or claim 2,
**characterised in that** the first and the second areas of the at least one first and the at least one second member (6, 20, 22, 24, 26, 8, 30, 32, 34, 36) are twisted in the first and second directions from the first and second planes so that on the attachment of the chin chain to the bridle a force which acts on the chin chain is transferred substantially equally onto a left side and a right side of a bit.

4. Chin chain according to claim 1, claim 2 or claim 3,
**characterised in that** by the twisting of the first area of the at least one first member (6, 20, 22, 24, 26) from the first plane of the at least one first member in the first direction and of the second area of the at least one second member from the second plane of the at least one second member (8, 30, 32, 34, 36) in the second direction, a first twisting of the at least one first member under loading against neighbouring members of the first chain element and a second twisting of the at least one second member on loading against neighbouring members of the second chain element are cancelled and, under loading on attachment to the bridle, the loading is transferred equally onto the two sides of the bit.

5. Chin chain according to any one of claims 1 to 4,
**characterised in that** the second and the third ends are connected by means of a connecting ring (12).

6. Chin chain according to any one of claims 1 to 5,
**characterised in that** at least four first members (20, 22, 24, 26) are provided, wherein three members (22, 24, 26) of the at least four first members (20, 22, 24, 26) pass through the loop of one member (20) of the at least four first members or at least four second members (30, 32, 34, 36) are provided wherein three members (32, 34, 36) of the at least four second members (30, 32, 34, 36) pass through the loop of one member of the at least four second members (30, 32,34,36).

7. Chin chain according to any one of claims 1 to 7,
**characterised in that** the at least one first member (6, 20, 22, 24, 26) and the at least one second member (8, 30, 32, 34, 36) have increased thicknesses at points of contact (23, 25, 28, 29) with neighbouring members.

8. Chin chain according to any one of claims 1 to 7,
**characterised in that** the at least one first member (6, 20, 22, 24, 26) and the at least one second member (8, 30, 32; 34, 36) is made of brass, copper, stainless steel or iron.

9. Chin chain according to any one of claims 1 to 8,
**characterised in that** a rubber underlay is provided into which the chin chain is pulled wherein the underlayer prevents injury to a horse on a twisting of individual members (6, 20, 22, 24, 26, 8, 30, 32, 34, 36).

## Revendications

1. Chaîne pour une bride, comportant
un premier élément de chaîne (2) et un second élément de chaîne (4),
dans laquelle le premier élément de chaîne (2) comporte au moins un premier maillon (6, 20, 22, 24, 26) et le second élément de chaîne comporte au moins un second maillon (8, 30, 32, 34, 36),
dans laquelle une première zone du au moins un premier maillon (6, 20, 22, 24, 26) est tordue à partir d'un premier plan du au moins un premier maillon (6, 20, 22, 24, 26) dans une première direction,
dans laquelle une seconde zone du au moins un second maillon (8, 30, 32, 34, 36) est tordue à partir d'un second plan du au moins un second maillon (8, 30, 32, 34, 36) dans une seconde direction, **caractérisée en ce que**
la première direction est opposée à la seconde direction.

2. Chaîne selon la revendication 1,
**caractérisée en ce que** le premier élément de chaîne (2) comporte une première (14) et une deuxième extrémité, et le second élément de chaîne (4) comporte une troisième et une quatrième (16) extrémité, la deuxième et la troisième extrémité étant reliées et la première et la quatrième extrémité étant conçues pour être fixées sur la bride.

3. Chaîne selon la revendication 1 ou 2,
**caractérisée en ce que** la première et la seconde zone du au moins un premier et du au moins un second maillon (6, 20, 22, 24, 26, 8, 30, 32, 34, 36) sont tordues dans la première et la seconde direction à partir des premier et second plans de telle sorte que lors d'une fixation de la chaîne sur la bride, une force agissant sur la chaîne est transférée en proportions sensiblement égales sur un côté gauche et sur un côté droit d'un mors.

4. Chaîne selon la revendication 1, 2 ou 3,
**caractérisée en ce que** par la torsion de la première zone du au moins un premier maillon (6, 20, 22, 24, 26) à partir du premier plan du au moins un premier maillon dans la première direction et de la seconde zone du au moins un second maillon à partir du second plan du au moins un second maillon (8, 30, 32, 34, 36) dans la seconde direction, une première torsion du au moins un premier maillon lors de l'application d'une charge à des maillons voisins du premier élément de chaîne et une seconde rotation du au moins un second maillon lors de l'application d'une charge à des maillons voisins du second élément de chaîne se compensent, et lors de l'application d'une charge pour la fixation sur la bride, la charge est transmise en proportions égales sur les deux côtés d'un mors.

5. Chaîne selon l'une quelconque des revendications 1 à 4,
**caractérisée en ce que** la deuxième et la troisième extrémité sont reliées au moyen d'un anneau de liaison (12).

6. Chaîne selon l'une des revendications 1 à 5,
**caractérisée en ce qu'**au moins quatre premiers maillons (20, 22, 24, 26) sont prévus,
dans laquelle trois maillons (22, 24, 26) des au moins quatre premiers maillons (20, 22, 24, 26) sont passés à travers un maillon (20) des au moins quatre premiers maillons, ou au moins quatre seconds maillons (30, 32, 34, 36) sont prévus, dans laquelle trois maillons (32, 34, 36) des au moins quatre seconds maillons (30, 32, 34) sont passés à travers un maillon (30) des au moins quatre seconds maillons (30, 32, 34, 36).

7. Chaîne selon l'une quelconque des revendications 1 à 6,
**caractérisée en ce que** le au moins un premier maillon (6, 20, 22, 24, 26) et le au moins un second maillon (8, 30, 32, 34, 36) présentent des augmentations d'épaisseur sur des points de contact (23, 25, 28, 29) avec des maillons voisins.

8. Chaîne selon l'une quelconque des revendications 1 à 7,
**caractérisée en ce que** le au moins un premier maillon (6, 20, 22, 24, 26) et le au moins un second maillon (8, 30, 32, 34, 36) sont constitués de laiton, de cuivre, d'acier inoxydable ou de fer.

9. Chaîne selon l'une quelconque des revendications 1 à 8,
**caractérisée en ce qu'**une sous-couche de caoutchouc est prévue, dans laquelle la chaîne est tirée, la sous-couche de caoutchouc empêchant une blessure du cheval lors d'une torsion du maillon séparé (6, 20, 22, 24, 26, 8, 30, 32, 34, 36).
